# EUROPEAN PATENT APPLICATION

(11) **EP 2 730 615 A1**
(43) Date of publication of application: **14.05.2014**
(21) Application number: 12811146.5
(22) Date of filing: 27.06.2012
(51) Int. Cl.: C08L 33/02, C08K 5/09, C08K 5/101, C08L 91/00

(54) **CARBOXYL GROUP-CONTAINING POLYMER COMPOSITION**

(30) Priority: 08.07.2011 JP 2011152204
(71) Applicant: Sumitomo Seika Chemicals Co., Ltd., Kako-gun, Hyogo 675-0145 (JP)
(72) Inventor: TAKEMORI, Shinichi, Himeji-shi, Hyogo 672-8076 (JP); MURAKAMI, Ryousuke, Himeji-shi, Hyogo 672-8076 (JP); MORIMITSU, Yuichiro, Himeji-shi, Hyogo 672-8076 (JP); SUZUKI, Masahiro, Himeji-shi, Hyogo 672-8076 (JP)
(74) Representative: Vossius & Partner
(86) International application number: PCT/JP2012/066399
(87) International publication number: WO 2013/008627

(57) **Abstract**

[Problems] To provide a carboxyl group-containing polymer composition having excellent dispersibility in water or the like, and a neutralized viscous liquid of which has a low viscosity and high transparency. [Solving Means] A carboxyl group-containing polymer composition containing at least one compound selected from the group consisting of (1) a fatty acid A and (2) a fatty acid ester formed between a fatty acid B and a monohydric alcohol having 1 to 22 carbon atoms, in an amount of from 0.05 to 5 parts by mass, based on 100 parts by mass of a carboxyl group-containing polymer, wherein the carboxyl group-containing polymer is obtainable by copolymerizing an α,β-unsaturated carboxylic acid and a compound having two or more ethylenically unsaturated groups.

## Description

### TECHNICAL FIELD

The present invention relates to a carboxyl group-containing polymer composition.

### BACKGROUND ART

Carboxyl group-containing polymers have been used for a thickener for cosmetics and the like, a moisturizer for poultices and the like, an emulsifier, a suspension stabilizer for suspensions and the like, a gelation base agent for batteries, or the like.

When the carboxyl group-containing polymers are used for the above-mentioned applications, for example, a carboxyl group-containing polymer is added to water or the like to prepare a homogeneous dispersion, and the dispersion is neutralized with and dissolved in an alkali, and used. However, in general, since a carboxyl group-containing polymer is in the form of a fine powder, the polymer is likely to form into a lumpy mass (doughy mass) when dispersed in water or the like. Once a doughy mass is formed, a gel-like layer is formed on the surface of the doughy mass, so that a rate of penetrating water into the internal of the doughy mass is slowed down, thereby making it difficult to obtain a homogeneous dispersion.

For example, it has been known that a carboxyl group-containing polymer composition containing 100 parts by weight of a carboxyl group-containing polymer prepared by copolymerizing an α,β-unsaturated carboxylic acid and a compound having at least two ethylenically unsaturated groups, and from 0.01 to 20 parts by weight of at least one compound selected from a fatty acid ester of a polyhydric alcohol and an alkylene oxide adduct of a fatty acid ester of a polyhydric alcohol has excellent dispersibility in water, from the viewpoint of preventing the formation of doughy mass (see Patent Publication 1).

In addition, in the recent years, compositions not including an alkylene oxide have been demanded, from the viewpoint of safety and environmental protection.

### PRIOR ART REFERENCES

### PATENT PUBLICATIONS

Patent Publication 1: Japanese Patent Laid-Open No. 2000-355614

### SUMMARY OF THE INVENTION

### PROBLEMS TO BE SOLVED BY THE INVENTION

While the carboxyl group-containing polymer composition disclosed in Patent Publication 1 has excellent dispersibility in water or the like, the viscosity of a neutralized viscous liquid is as high as 36,500 mPa•s or more; therefore, the carboxyl group-containing polymer composition has some disadvantages such that for example, when a concentration of a carboxyl group-containing polymer composition in the neutralized viscous liquid is increased or decreased, the viscosity would change abruptly, thereby making it difficult to control the viscosity of manufactured articles such as cosmetics, and that transparency of the neutralized viscous liquid is low.

An object of the present invention is to provide a carboxyl group-containing polymer composition having excellent dispersibility in water or the like, and a neutralized viscous liquid of which has a low viscosity and high transparency.

### MEANS TO SOLVE THE PROBLEMS

As a result of intensive studies in order to solve the above-mentioned problems, the present inventors have found that a carboxyl group-containing polymer composition gives a neutralized viscous liquid having a low viscosity and excellent transparency, the carboxyl group-containing polymer composition containing a specified amount of a fatty acid and/or a fatty acid ester formed between a fatty acid and a monohydric alcohol having 1 to 22 carbon atoms, based on a carboxyl group-containing polymer obtainable by copolymerizing an α,β-unsaturated carboxylic acid and a compound having two or more ethylenically unsaturated groups. The present invention has been perfected thereby.

The present invention relates to a carboxyl group-containing polymer composition containing
at least one compound selected from the group consisting of
(1) a fatty acid A and
(2) a fatty acid ester formed between a fatty acid B and a monohydric alcohol having 1 to 22 carbon atoms
   in an amount of from 0.05 to 5 parts by mass, based on 100 parts by mass of a carboxyl group-containing polymer,
   wherein the carboxyl group-containing polymer is obtainable by copolymerizing an α,β-unsaturated carboxylic acid and a compound having two or more ethylenically unsaturated groups.

### EFFECTS OF THE INVENTION

The carboxyl group-containing polymer composition of the present invention exhibits some excellent effects that the polymer composition has excellent dispersibility in water or the like, and a neutralized viscous liquid of which has a low viscosity and high transparency.

### MODES FOR CARRYING OUT THE INVENTION

The carboxyl group-containing polymer composition of the present invention contains a carboxyl group-containing polymer, and at least one compound selected from the group consisting of (1) a fatty acid (a fatty acid A), and (2) a fatty acid ester formed between a fatty acid (a fatty acid B) and a monohydric alcohol having 1 to 22 carbon atoms.

The carboxyl group-containing polymer in the present invention is obtainable by copolymerizing an α,β-unsaturated carboxylic acid and a compound having two or more ethylenically unsaturated groups.

The α,β-unsaturated carboxylic acid includes, but not particularly limited to, for example, olefinic unsaturated carboxylic acids having 3 to 5 carbon atoms, such as acrylic acid, methacrylic acid, crotonic acid, maleic acid, itaconic acid, and fumaric acid, and the like. Among them, acrylic acid is preferred because it is inexpensive and readily available, and a neutralized viscous liquid of which has high transparency. Here, these α,β-unsaturated carboxylic acids may be used alone or in a combination of two or more kinds.

Here, a neutralized viscous liquid as used herein refers to a solution prepared by dispersing a carboxyl group-containing polymer composition in water, and thereafter adjusting its pH to about 7, in other words, a pH of from 6 to 8, with a neutralizing agent such as an alkaline compound. It is preferably that the amount of the carboxyl group-containing polymer composition in the neutralized viscous liquid is from 0.05 to 2 parts by mass or so, based on 100 parts by mass of water.

The compound having two or more ethylenically unsaturated groups includes, but not particularly limited to, di- or higher poly-substituted acrylic esters of polyols; di- or higher poly-substituted methacrylic esters of polyols; di- or higher poly-substituted allyl ethers of polyols; diallyl phthalate, triallyl phosphate, allyl methacrylate, tetraallyloxyethane, triallyl cyanurate, divinyl adipate, vinyl crotonate, 1,5-hexadiene, divinylbenzene, and the like. Here, the above-mentioned polyols include ethylene glycol, propylene glycol, polyoxyethylene glycol, polyoxypropylene glycol, glycerol, polyglycerol, trimethylolpropane, pentaerythritol, saccharose, sorbitol, and the like. Among these compounds having two or more ethylenically unsaturated groups, pentaerythritol tetraallyl ether, tetraallyloxyethane, triallyl phosphate, and polyallyl saccharose are preferred, from the viewpoint of easy adjustment of viscosity of the neutralized viscous liquid using the obtainable carboxyl group-containing polymer composition. These compounds having two or more ethylenically unsaturated groups may be used alone or in a combination of two or more kinds.

The amount of the compound having two or more ethylenically unsaturated groups used is preferably 0.01 parts by mass or more, based on 100 parts by mass of the α,β-unsaturated carboxylic acid, from the viewpoint of a viscosity-adjusting effect of the neutralized viscous liquid using the obtainable carboxyl group-containing polymer composition, and the amount used is preferably 10 parts by mass or less, from the viewpoint of dispersibility of the carboxyl group-containing polymer composition. From these viewpoints, the amount of the compound having two or more ethylenically unsaturated groups used is preferably from 0.01 to 10 parts by mass, more preferably from 0.05 to 10 parts by mass, and even more preferably from 0.05 to 3 parts by mass, based on 100 parts by mass of the α,β-unsaturated carboxylic acid.

Here, when the α,β-unsaturated carboxylic acid and the compound having two or more ethylenically unsaturated groups are copolymerized, an α,β-unsaturated compound other than the above-mentioned α,β-unsaturated carboxylic acid can be blended as a monomer component of the carboxyl group-containing polymer, for the purposes of increasing thickening property, and improving stability of an emulsion or suspension.

The α,β-unsaturated compound includes, but not particularly limited to, for example, acrylic esters such as methyl acrylate, ethyl acrylate, isopropyl acrylate, butyl acrylate, octyl acrylate, 2-ethyl acrylate, decyl acrylate, lauroyl acrylate, stearyl acrylate, and glycidyl acrylate; methacrylic esters corresponding to the above-mentioned acrylic esters; glycidyl ethers such as vinyl glycidyl ether, isopropenyl glycidyl ether, allyl glycidyl ether, and butenyl glycidyl ether; acrylamides such as acrylamide, N-methyl acrylamide, N-ethyl acrylamide, and N-t-butyl acrylamide; methacrylamides corresponding to the above-mentioned acrylamides; vinyl esters such as vinyl acetate, vinyl propionate, and vinyl benzoate; and the like. Among these α,β-unsaturated compounds, the acrylic esters and the methacrylic esters are preferred, and stearyl methacrylate, eicosanyl methacrylate, behenyl methacrylate, and tetracosanyl methacrylate are more preferred, from the viewpoint of increasing thickening property and improving stability of an emulsion or suspension. Here, these α,β-unsaturated compounds may be used alone or in a combination of two or more kinds. Further, as the acrylic esters and the methacrylic esters mentioned above, for example, a commercially available product such as one manufactured by NOF CORPORATION under the trade name of BLEMMAR VMA70, and the like may be used.

The amount of the α,β-unsaturated compound used is preferably from 0.1 to 20 parts by mass, and more preferably from 1 to 10 parts by mass, based on 100 parts by mass of the α,β-unsaturated carboxylic acid, from the viewpoint of a viscosity-adjusting effect of the neutralized viscous liquid used in the obtainable carboxyl group-containing polymer composition.

The fatty acid A in the present invention is preferably a saturated or unsaturated fatty acid, having 6 to 30 carbon atoms, from the viewpoint of preventing doughy mass during dispersion in water.

Specific examples of the saturated fatty acid include caproic acid, enanthic acid, caprylic acid, octylic acid, pelargonic acid, capric acid, lauric acid, myristic acid, pentadecylic acid, palmitic acid, margaric acid, stearic acid, isostearic acid, tuberculostearic acid, arachidic acid, behenic acid, lignoceric acid, cerotic acid, montanic acid, melissic acid, and the like.

Specific examples of the unsaturated fatty acid include myristoleic acid, palmitoleic acid, oleic acid, elaidic acid, vaccenic acid, linoleic acid, linolenic acid, pinolenic acid, eleostearic acid, stearidonic acid, bosseopentaenoic acid, gadoleic acid, eicosenoic acid, eicosadienoic acid, Mead acid, eicosatrienoic acid, arachidonic acid, eicosatetraenoic acid, eicosapentaenoic acid, erucic acid, adrenic acid, Osbond acid, clupanodonic acid, docosahexaenoic acid, nervonic acid, tetracopentaenoic acid, and Nisinic acid; and fatty acids from natural fats and oils such as olive oil fatty acids, rapeseed oil fatty acids, palm oil fatty acids, safflower oil fatty acids, linseed oil fatty acids, coconut oil fatty acids, soybean oil fatty acids, sunflower oil fatty acids, cottonseed oil fatty acid, sesame oil fatty acids, perilla oil fatty acid oils, wood oil fatty acids, castor oil fatty acids, and the like.

Among these fatty acids, caproic acid, caprylic acid, octylic acid, capric acid, lauric acid, myristic acid, palmitic acid, stearic acid, arachidic acid, behenic acid, oleic acid, linoleic acid, linolenic acid, soybean oil fatty acids, coconut oil fatty acids, palm oil fatty acids, cottonseed oil fatty cids, rapeseed oil fatty acids, and castor oil fatty acids are preferred, from the viewpoint that the resulting carboxyl group-containing polymer composition has excellent dispersibility in water or the like, and a neutralized viscous liquid of which has a low viscosity and high transparency. These fatty acids may be used alone or in a combination of two or more kinds.

The fatty acid ester in the present invention is an ester compound formed between a fatty acid B and a monohydric alcohol having 1 to 22 carbon atoms, and preferably 1 to 18 carbon atoms.

The fatty acid B is preferably a saturated or unsaturated fatty acid having 6 to 30 carbon atoms, in the same manner as in the fatty acid A.

The monohydric alcohol having 1 to 22 carbon atoms includes methyl alcohol, ethyl alcohol, propyl alcohol, isopropyl alcohol, butyl alcohol, isobutyl alcohol, amyl alcohol, hexyl alcohol, heptyl alcohol, octyl alcohol, ethylhexyl alcohol, nonyl alcohol, decyl alcohol, undecyl alcohol, dodecyl alcohol, isododecyl alcohol, tridecyl alcohol, isotridecyl alcohol, tetradecyl alcohol, pentadecyl alcohol, cetyl alcohol, isocetyl alcohol, hexyldecyl alcohol, heptadecyl alcohol, octadecyl alcohol, isostearyl alcohol, cetearyl alcohol, oleyl alcohol, nonadecyl alcohol, arachyl alcohol, octyldodecyl alcohol, behenyl alcohol, and the like.

Specific examples of the fatty acid ester include ethyl caproate, ethyl caprylate, cetyl caprylate, octadecyl caprylate, ethyl caprate, isopropyl laurate, hexyl laurate, dodecyl laurate, isostearyl laurate, cetyl laurate, isocetyl laurate, butyl myristate, isopropyl myristate, decyl myristate, isotridecyl myristate, tetradecyl myristate, cetyl myristate, isocetyl myristate, isostearyl myristate, octyldodecyl myristate, ethyl palmitate, isopropyl palmitate, octyl palmitate, dodecyl palmitate, ethylhexyl palmitate, cetyl palmitate, hexyldecyl palmitate, octadecyl palmitate, isostearyl palmitate, ethyl stearate, isopropyl stearate, butyl stearate, isobutyl stearate, octyl stearate, ethylhexyl stearate, tridecyl stearate, cetyl stearate, isocetyl stearate, cetearyl stearate, octadecyl stearate, octyldodecyl stearate, ethyl isostearate, hexyl isostearate, tridecyl isostearate, isostearyl isostearate, octyldodecyl isostearate, methyl oleate, ethyl oleate, octyl oleate, octyldodecyl oleate, isododecyl oleate, oleyl oleate, octyldodecyl oleate, ethyl linoleate, isopropyl linoleate, oleyl linoleate, ethyl linolenate, ethyl cocoate, and the like.

Among them, ethyl caproate, ethyl caprylate, ethyl caprate, isopropyl myristate, ethyl stearate, isopropyl stearate, octyl stearate, ethylhexyl stearate, octadecyl stearate, ethyl isostearate, tridecyl isostearate, methyl oleate, ethyl oleate, octyl oleate, dodecyl oleate, octyldodecyl oleate, oleyl oleate, ethyl linoleate, isopropyl linoleate, oleyl linoleate, ethyl linolenate, and ethyl cocoate are preferred, from the viewpoint that the resulting carboxyl group-containing polymer composition has excellent dispersibility in water or the like, and a neutralized viscous liquid of which has a low viscosity and high transparency. Here, these fatty acid esters may be used alone or in a combination of two or more kinds.

The amount of the fatty acid or the fatty acid ester used, or a total amount thereof used when both are used together, is from 0.05 to 5 parts by mass, and preferably from 0.1 to 4 parts by mass, based on 100 parts by mass of the α,β-unsaturated carboxylic acid. When the amount used is less than 0.05 parts by mass, the dispersibility of the resulting carboxyl group-containing polymer composition in water is worsened. When the amount used exceeds 5 parts by mass, there is a risk that a viscosity-adjusting effect of the neutralized viscous liquid prepared from the resulting carboxyl group-containing polymer composition is less likely to be exhibited.

The method for producing a carboxyl group-containing polymer composition of the present invention is not particularly limited. The carboxyl group-containing polymer composition of the present invention can be produced, for example, by the following methods (1) to (5):
(1) a method including polymerizing an α,β-unsaturated carboxylic acid and a compound having two or more ethylenically unsaturated groups, wherein a fatty acid and/or a fatty acid ester is co-present in a given amount from an initial stage of the polymerization;
(2) a method including mixing an α,β-unsaturated carboxylic acid and a compound having two or more ethylenically unsaturated groups, and polymerizing the components while adding a fatty acid and/or a fatty acid ester to the component mixture obtained;
(3) a method including polymerizing an α,β-unsaturated carboxylic acid and a compound having two or more ethylenically unsaturated groups while adding them to a system in which a fatty acid and/or a fatty acid ester is present;
(4) a method including previously polymerizing an α,β-unsaturated carboxylic acid and a compound having two or more ethylenically unsaturated groups, and after the termination of the polymerization adding to the slurry obtained a fatty acid and/or a fatty acid ester; and
(5) a method including adding a carboxyl group-containing polymer to a solution prepared by dissolving a fatty acid and/or a fatty acid ester in a solvent.

Among these methods, the method of the above (1) is preferred, from the viewpoint of simplicity in the procedures.

The method (1) will be more specifically described hereinbelow.

A reaction vessel equipped with a stirrer, a thermometer, a nitrogen gas inlet tube, and a condenser tube is charged with given amounts of an α,β-unsaturated carboxylic acid, a compound having two or more ethylenically unsaturated groups, a fatty acid and/or a fatty acid ester, a radical polymerization initiator, and a reaction solvent that are previously weighed. The contents inside the reaction vessel are stirred and mixed so as to have a homogeneous composition, and thereafter the mixture is heated to carry out a polymerization reaction.

The above-mentioned radical polymerization initiator includes, but not particularly limited to, for example, α,α'-azobisisobutyronitrile, 2,2'-azobis-2,4-dimethylvaleronitrile, 2,2'-azobismethyl isobutyrate, benzoyl peroxide, lauroyl peroxide, cumene hydroperoxide, tertiary butyl hydroperoxide, and the like. These radical polymerization initiators may be used alone or in a combination of two or more kinds.

The amount of the radical polymerization initiator used is preferably from 0.01 to 0.45 parts by mass, and more preferably from 0.01 to 0.35 parts by mass, based on 100 parts by weight of the α,β-unsaturated carboxylic acid, from the viewpoint of adjusting the polymerization reaction rate.

The above-mentioned reaction solvent is preferably, but not particularly limited to, a solvent which dissolves the α,β-unsaturated carboxylic acids and the compound having two or more ethylenically unsaturated groups but does not dissolve the obtainable carboxyl group-containing polymer composition. The reaction solvent includes, for example, aliphatic hydrocarbons such as normal pentane, normal hexane, isohexane, normal heptane, normal octane, and isooctane; alicylic hydrocarbons such as cyclopentane, methylcyclopentane, cyclohexane, and methylcyclohexane; aromatic hydrocarbons such as benzene, toluene, and xylene; halogenated compounds such as chlorobenzene and ethylene dichloride; alkyl esters of acetic acid such as ethyl acetate and isopropyl acetate; ketone compounds such as methyl ethyl ketone and methyl isobutyl ketone; and the like. Among these reaction solvents, normal hexane, cyclohexane, normal heptane, ethylene dichloride, and ethyl acetate are preferred, from the viewpoint of having stable quality and being readily available. These reaction solvents may be used alone or in a combination of two or more kinds.

The amount of the reaction solvent used is preferably from 200 to 10,000 parts by mass, and more preferably from 300 to 2,000 parts by mass, based on 100 parts by weight of the α,β-unsaturated carboxylic acid, from the viewpoint of preventing the reaction control from becoming difficult due to the precipitation of the formed carboxyl group-containing polymer composition, and using a reaction solvent in an amount that measures up economically.

It is preferable that the atmosphere of the polymerization reaction system is usually an atmosphere of an inert gas such as nitrogen gas or argon gas. The reaction temperature during the polymerization is preferably set at a temperature of from 50° to 90°C, and more preferably set at a temperature of from 55° to 80°C, from the viewpoint of controlling an increase in viscosity of the reaction solution, thereby facilitating the reaction control, and from the viewpoint of controlling bulk density of the resulting carboxyl group-containing polymer composition. The reaction time for the polymerization cannot be absolutely determined because the reaction time would vary depending upon reaction temperatures, and it is preferable that the reaction time is usually from 0.5 to 10 hours or so. The intended carboxyl group-containing polymer composition can be isolated in the form of white fine powder by heating a reaction mixture after the termination of the reaction to 80° to 120°C to remove the solvent.

The carboxyl group-containing polymer composition of the present invention has the features of having excellent dispersibility in water or the like, and a neutralized viscous liquid of which has a low viscosity and high transparency.

Here, the dispersibility of the carboxyl group-containing polymer composition in water can be judged by the state of generating doughy mass when the carboxyl group-containing polymer composition is supplied into water. Specifically, the time required for forming a carboxyl group-containing polymer composition supplied into water into a transparent gel-like state and dispersing in water without the generation of doughy mass is used as an index for dispersibility of the carboxyl group-containing polymer composition in water, wherein it can be judged that the shorter the time needed, the more excellent the dispersibility of the carboxyl group-containing polymer composition in water.

In addition, the viscosity of the neutralized viscous liquid is measured with a B-type rotary viscometer under the conditions of a temperature of 25°C. When the viscosity of the neutralized viscous liquid exceeds 25,000 mPa•s, for example, there are some risks of causing some disadvantages that the viscosity abruptly changes when the concentration of the carboxyl group-containing polymer composition increases or decreases in the neutralized viscous liquid, thereby making it more unlikely to control the viscosity of the manufactured articles such as cosmetics, and that the feel of the manufactured articles is worsened.

In addition, the transparency of the neutralized viscous liquid can be judged by light transmission at a wavelength of 425nm, measured with a spectrophotometer, and a neutralized viscous liquid of which transmission is 90% or more can be judged to be a neutralized viscous liquid having high transparency. When the neutralized viscous liquid has transmission of less than 90%, there are some risks, for example, of causing disadvantages that the appearance upon use in cosmetics (designing property) is worsened.

The mechanisms of exhibiting the function having excellent dispersibility of the carboxyl group-containing polymer composition of the present invention in water or the like is not elucidated, and it is deduced as follows. In general, the carboxyl group-containing polymer obtainable by polymerization of an α,β-unsaturated carboxylic acid is a fine powder and has a high hydrophilicity, the carboxyl group-containing polymer absorbs water immediately after the powder supply when dispersed in water or the like so that the particle surface become gel-like state, which in turn forms lumpy mass (doughy mass) by its adhesive strength. The water is less likely to be penetrated into the internal of the particles once the doughy mass is formed, thereby making it difficult to obtain a homogeneous gel dispersion. In the composition of the present invention, the particle surface is made weakly hydrophobic with a specified fatty acid and/or fatty acid ester, thereby realizing excellent dispersibility without the generation of doughy mass upon dispersion in water.

In addition, the mechanisms for controlling the viscosity of the neutralized viscous liquid low are not elucidated, and it is deduced as follows. Since a specified fatty acid and/or fatty acid ester is used, which is less likely to form a covalent bond with the carboxyl group-containing polymer, the viscosity of the obtainable neutralized viscous liquid is controlled low.

Also, the mechanisms for exhibiting the function of having high transparency of the above-mentioned neutralized viscous liquid are not elucidated, and it is deduced as follows. The above-mentioned specified fatty acid and/or fatty acid ester has excellent affmity to the carboxyl group-containing polymer, and consequently the transparency of the neutralized viscous liquid becomes high.

### EXAMPLES

The present invention will be explained more specifically hereinbelow by means of Examples, without intending to limit the present invention only to these examples.

### Example 1

A 500 mL (milliliters) four-necked flask equipped with a stirrer, a thermometer, a nitrogen inlet tube, and a condenser tube was charged with 45 g (0.625 mol) of acrylic acid, 0.88 g of an alkyl methacrylate of which alkyl group has 18 to 24 carbon atoms BLEMMAR VMA70 (manufactured by NOF CORPORATION, a mixture of from 10 to 20 parts by mass of stearyl methacrylate, from 10 to 20 parts by mass of eicosanyl methacrylate, from 59 to 80 parts by mass of behenyl methacrylate, and 1 part by mass or less of tetracosanyl methacrylate), 0.18 g of a compound having two or more ethylenically unsaturated groups pentaerythritol tetraallyl ether, 0.081 g (0.00035 mol) of a radical polymerization initiator 2,2'-azobismethylisobutyrate, 160 g of a reaction solvent normal heptane and 24 g of ethyl acetate, and 0.45 g of oleic acid (manufactured by NOF CORPORATION, Model No.: Extra Olein) (1 part by mass based on 100 parts by mass of acrylic acid). Subsequently, the solution was homogeneously mixed while stirring, and thereafter nitrogen gas was blown into the reaction vessel in order to remove oxygen which exists in an upper space of the reaction vessel (four-necked flask), raw materials and a reaction solvent. Next, the reaction was carried out for 4 hours while keeping at a temperature of from 60° to 65°C under nitrogen atmosphere.

After the termination of the reaction, the formed slurry was heated to 110°C to distill off normal heptane and ethyl acetate, and the residue was dried under a reduced pressure at 115°C, 10 mmHg for 8 hours, to give 43 g of a carboxyl group-containing polymer composition in the form of a white fine powder.

### Example 2

The same procedures as in Example 1 were carried out except that the amount of oleic acid used was changed from 0.45 g to 0.1125 g (0.25 parts by mass, based on 100 parts by mass of acrylic acid), to give 40 g of a carboxyl group-containing polymer composition in the form of a white fine powder.

### Example 3

The same procedures as in Example 1 were carried out except that 0.45 g of oleic acid was changed to 0.225 g of caproic acid (manufactured by Wako Pure Chemical Industries Ltd., reagent first grade) (0.5 parts by mass, based on 100 parts by mass of acrylic acid), to give 43 g of a carboxyl group-containing polymer composition in the form of a white fine powder.

### Example 4

The same procedures as in Example 1 were carried out except that 0.45 g of oleic acid was changed to 0.225 g of linolenic acid (manufactured by Wako Pure Chemical Industries Ltd., reagent first grade) (0.5 parts by mass, based on 100 parts by mass of acrylic acid), to give 43 g of a carboxyl group-containing polymer composition in the form of a white fine powder.

### Example 5

The same procedures as in Example 1 were carried out except that 0.45 g of oleic acid was changed to 0.9 g of a rapeseed oil fatty acid (manufactured by Wako Pure Chemical Industries Ltd., reagent first grade) (2 parts by mass, based on 100 parts by mass of acrylic acid), to give 43 g of a carboxyl group-containing polymer composition in the form of a white fine powder.

### Example 6

The same procedures as in Example 1 were carried out except that 0.45 g of oleic acid was changed to 0.225 g of ethyl oleate (manufactured by NOF CORPORATION, Model No.: NOFABLE EO-85S) (0.5 parts by mass, based on 100 parts by mass of acrylic acid), to give 43 g of a carboxyl group-containing polymer composition in the form of a white fine powder.

### Example 7

The same procedures as in Example 1 were carried out except that 0.45 g of oleic acid was changed to 0.225 g of ethyl caprate (manufactured by Wako Pure Chemical Industries Ltd., reagent first grade) (0.25 parts by mass, based on 100 parts by mass of acrylic acid), to give 43 g of a carboxyl group-containing polymer composition in the form of a white fine powder.

### Example 8

The same procedures as in Example 1 were carried out except that 0.45 g of oleic acid was changed to 1.8 g of octadecyl stearate (manufactured by NOF CORPORATION, Model No.: UNISTAR MB-9676) (4 parts by mass, based on 100 parts by mass of acrylic acid), to give 43 g of a carboxyl group-containing polymer composition in the form of a white fine powder.

### Comparative Example 1

The same procedures as in Example 1 were carried out except that 0.45 g of oleic acid was not used, to give 43 g of a carboxyl group-containing polymer composition in the form of a white fine powder.

### Comparative Example 2

The same procedures as in Example 1 were carried out except that the amount of oleic acid used was changed from 0.45 g to 0.018 g (0.04 parts by mass, based on 100 parts by mass of acrylic acid), to give 40 g of a carboxyl group-containing polymer composition in the form of a white fine powder.

### Comparative Example 3

The same procedures as in Example 1 were carried out except that the amount of oleic acid used was changed from 0.45 g to 2.7 g (6 parts by mass, based on 100 parts by mass of acrylic acid), to give 42 g of a carboxyl group-containing polymer composition in the form of a white fine powder.

### Comparative Example 4

The same procedures as in Example 1 were carried out except that 0.45 g of oleic acid was changed to 0.45 g of polyoxyethylene cured castor oil triisostearate (manufactured by Nihon Emulsion Co., Ltd., Model No.: RWIS-300, an ethylene oxide adduct of which ethylene oxide moiety is 60 mol) (1 part by mass, based on 100 parts by mass of acrylic acid), to give 43 g of a carboxyl group-containing polymer composition in the form of a white fine powder.

### Comparative Example 5

The same procedures as in Example 1 were carried out except that 0.45 g of oleic acid was changed to 0.45 g of monoglycerol monooleate (manufactured by RIKEN VITAMIN CO., LTD, Model No.: RIKEMAL OL-100, number of hydroxyl groups: 2) (1 part by mass, based on 100 parts by mass of acrylic acid), to give 43 g of a carboxyl group-containing polymer composition in the form of a white fine powder.

The carboxyl group-containing polymer compositions obtained in Examples and Comparative Examples were measured and evaluated in accordance with the following methods. The results are shown in Table 1.

### (1) Dispersion Time Under Non-Stirring

A 500 mL beaker is charged with 298.5 g of ion-exchanged water, and the temperature of the ion-exchanged water is adjusted to 25°C. To this beaker is supplied 1.5 g of a carboxyl group-containing polymer composition at once under non-stirring conditions, and the dispersion state of the carboxyl group-containing polymer composition is visually observed. The time period (minutes) required for dispersing all the carboxyl group-containing polymer composition without forming a doughy mass is measured. If the time period for requiring the dispersion is 15 minutes or less, it can be judged to be excellent in dispersibility. Here, in a case where a doughy mass is formed without carrying out dispersion for a time period even after exceeding 60 minutes, the dispersion time is evaluated as "60 <."

### (2) Dispersion Time Under Stirring

A 500 mL beaker is charged with 298.5 g of ion-exchanged water, and the temperature of the ion-exchanged water is adjusted to 25°C. While stirring this beaker with a stirrer equipped with 4 blade paddles (blade diameter: 50 mm) at a rotational speed of 300 r/min, 1.5 g of a carboxyl group-containing polymer composition is supplied thereto at once, and the dispersion state of the carboxyl group-containing polymer composition is visually observed. The time period required for dispersing all the carboxyl group-containing polymer composition without forming a doughy mass is measured. If the time period for requiring the dispersion is 10 minutes or less, it can be judged to be excellent in dispersibility. Here, in a case where a doughy mass is formed without carrying out the dispersion even after exceeding 60 minutes, the dispersion time is evaluated as "60 <."

### (3) Viscosity of Neutralized Viscous Liquid

The dispersion obtained in accordance with the evaluation of the above (2) Dispersion Time Under Stirring is neutralized to a pH of 7 with a 0.5% by mass aqueous sodium hydroxide solution to give a neutralized viscous liquid for evaluation. As to the neutralized viscous liquid for evaluation obtained, a viscosity after 60 seconds thereof is measured under conditions of 20 rotations per minute and a temperature of 25°C with a B-type rotary viscometer, Rotor No. 7. If the viscosity is 25,000 mPa•s or less, it can be judged to be an appropriate viscosity.

### (4) Transmittance of Neutralized Viscous Liquid

As to the neutralized viscous liquid for evaluation obtained in accordance with the same manner as the evaluation of the above (3) Viscosity of the Neutralized Viscous Liquid, the light transmittance at a wavelength of 425 nm is measured with a spectrophotometer (manufactured by Shimadzu Corporation, Product No.: UV-3150). If the transmittance is 90% or more, it can be judged to have high transparency.

[Table 1]

**Table 1**

| | Fatty Acid or Fatty Acid Ester | | | | Evaluation of Carboxyl Group-Containing Polymer Composition | | | |
|---|---|---|---|---|---|---|---|---|
| | Product Name | Kinds of Fatty Acid | Number of Carbon Atoms of Fatty Acid | Amount Used (Parts by Mass)* | Dispersion Time (minute) | | Viscosity of Neutralized Viscous Liquid (mPa•s) | Transmittance (%) |
| | | | | | Non-Stirring | Stirring | | |
| Ex. 1 | Oleic Acid | Monounsaturated fatty acid | C18 | 1 | 5 | 1 | 15,500 | 96 |
| Ex. 2 | Oleic Acid | Monounsaturated fatty acid | C18 | 0.25 | 7 | 2 | 15,000 | 97 |
| Ex. 3 | Caproic Acid | Saturated fatty acid | C6 | 0.5 | 8 | 3 | 16,000 | 93 |
| Ex. 4 | Linolenic Acid | Triunsaturated fatty acid | C18 | 0.5 | 8 | 3 | 15,900 | 95 |
| Ex. 5 | Rapeseed Oil | Mono-, di-, tri-unsaturated tatty acid | C18, C16 etc. | 2 | 7 | 2 | 16,500 | 93 |
| Ex. 6 | Ethyl Oleate | Unsaturated fatty acid ester | C18 | 0.5 | 6 | 2 | 15,200 | 96 |
| Ex. 7 | Ethyl Caprate | Saturated fatty acid ester | C10 | 0.25 | 8 | 3 | 15,300 | 94 |
| Ex. 8 | Octadecyl Stearate | Saturated fatty acid ester | C18 | 4 | 7 | 2 | 15,000 | 92 |
| Comp. Ex. 1 | - | - | - | 0 | 60< | 60< | 15,000 | 99 |
| Comp. Ex. 2 | Oleic Acid | Monounsaturated fatty acid | C18 | 0.04 | 40 | 20 | 15,000 | 98 |
| Comp. Ex. 3 | Oleic Acid | Monounsaturated fatty acid | C18 | 6 | 10 | 3 | 39,000 | 88 |
| Comp. Ex. 4 | Polyoxyethylene Cured Castor Oil Triisostearate | - | - | 1 | 7 | 3 | 28,000 | 85 |
| Comp. Ex. 5 | Monoglycerol Monooleate | - | - | 1 | 60< | 12 | 45,000 | 81 |

| | | | | | | | | |
|---|---|---|---|---|---|---|---|---|
| * The amount of the fatty acid or fatty acid ester used is expressed by parts by mass, based on 100 parts by mass of the α-,β-unsaturated carboxylic acid. | | | | | | | | |

It can be seen from the above results that the carboxyl group-containing polymer compositions of Examples 1 to 8 have excellent dispersibility in water (non-stirring conditions, stirring conditions), and a neutralized viscous liquid of which has a low viscosity of 25,000 mPa•s or less and high transparency having a transmittance of 90% or more is obtained. On the other hand, the carboxyl group-containing polymer compositions of Comparative Example 1 where a fatty acid or fatty acid ester is not blended, and Comparative Example 2 where an amount of a fatty acid or a fatty acid ester blended is too small are disadvantageous in dispersibility in water, even though the polymer compositions give a neutralized viscous liquid having a low viscosity and high transparency; the carboxyl group-containing polymer composition of Comparative Example 3 where an amount of a fatty acid or fatty acid ester blended is too large gives a neutralized viscous liquid having a high viscosity, thereby lowering its transparency. The carboxyl group-containing polymer compositions of Comparative Examples 4 and 5 where a polyhydric alcohol fatty acid ester or an alkylene oxide adduct of a polyhydric alcohol fatty acid ester is blended are also disadvantageous in any one of dispersibility in water, viscosity and transparency of a neutralized viscous liquid.

### INDUSTRIAL APPLICABILITY

The carboxyl group-containing polymer composition of the present invention can be used, for example, a thickener for cosmetics and the like, a moisturizer for poultices and the like, an emulsifier, a suspension stabilizer for suspensions and the like, a gelation base agent for batteries and the like.

## Claims

1. A carboxyl group-containing polymer composition comprising:
at least one compound selected from the group consisting of:
(1) a fatty acid A and
(2) a fatty acid ester formed between a fatty acid B and a monohydric alcohol having 1 to 22 carbon atoms,
in an amount of from 0.05 to 5 parts by mass, based on 100 parts by mass of a carboxyl group-containing polymer,
wherein the carboxyl group-containing polymer is obtainable by copolymerizing an α,β-unsaturated carboxylic acid and a compound
having two or more ethylenically unsaturated groups.

2. The carboxyl group-containing polymer composition according to claim 1, wherein the α,β-unsaturated carboxylic acid is acrylic acid.

3. The carboxyl group-containing polymer composition according to claim 1 or 2, wherein the compound having two or more ethylenically unsaturated groups is selected from the group consisting of pentaerythritol tetraallyl ether, tetraallyloxyethane, triallyl phosphate, and polyallyl saccharose.

4. The carboxyl group-containing polymer composition according to any one of claims 1 to 3, wherein the fatty acid A is a saturated or unsaturated fatty acid having 6 to 30 carbon atoms.

5. The carboxyl group-containing polymer composition according to any one of claims 1 to 4, wherein the fatty acid A is at least one member selected from the group consisting of caproic acid, caprylic acid, octylic acid capric acid, lauric acid, myristic acid, palmitic acid, stearic acid, arachidic acid, behenic acid, oleic acid, linoleic acid, linolenic acid, soybean oil fatty acids, coconut oil fatty acids, palm oil fatty acids, cottonseed oil fatty acids, rapeseed oil fatty acids, and castor oil fatty acids.

6. The carboxyl group-containing polymer composition according to any one of claims 1 to 5, wherein the fatty acid ester is at least one member selected from the group consisting of ethyl caproate, ethyl caprylate, ethyl caprate, isopropyl myristate, ethyl stearate, isopropyl stearate, octyl stearate, ethylhexyl stearate, octadecyl stearate, ethyl isostearate, tridecyl isostearate, methyl oleate, ethyl oleate, octyl oleate, dodecyl oleate, octyldodecyl oleate, oleyl oleate, ethyl linoleate, isopropyl linoleate, oleyl linoleate, ethyl linolenate, and ethyl cocoate.
